# EUROPÄISCHE PATENTSCHRIFT

(11) **EP 3 627 632 B1**
(45) Veröffentlichungstag und Bekanntmachung des Hinweises auf die Patenterteilung: **06.09.2023**
(21) Anmeldenummer: 18196080.8
(22) Anmeldetag: 21.09.2018
(51) Int. Cl.: H01R 13/639, H01R 31/06, H01R 4/38, H01R 13/622, H01R 13/627, B23K 9/32, H01R 101/00

(54) **STECKERADAPTER**
PLUG ADAPTER
ADAPTATEUR À PRISE

(43) Veröffentlichungstag der Anmeldung: 25.03.2020
(73) Patentinhaber: Dinse G.m.b.H., 22419 Hamburg (DE)
(72) Erfinder: BADE, Tim, 20253 Hamburg (DE); JÜRGENS, Michael, 22529 Hamburg (DE)
(74) Vertreter: Raffay & Fleck

(56) Entgegenhaltungen:
- EP-A1- 2 848 830
- WO-A1-2010/088707
- WO-A1-2016/116493
- CH-A5- 681 213
- US-A1- 2017 148 553

## Beschreibung

Die vorliegende Erfindung betrifft einen Steckeradapter zum Verändern der Anschlussgeometrie eines Polanschlusses einer elektrischen Quelle, insbesondere einer Schweißstromquelle, von einer weiblichen Kontaktbuchse zu einem männlichen Kontaktstift.

Elektrische Schweißgeräte bzw. elektrische Schweißmaschinen haben als ein wesentliches Element eine sogenannte Schweißstromquelle. In dieser Schweißstromquelle wird über entsprechende Wandler eine Netzspannung umgewandelt für eine elektrische Versorgung des eigentlichen Schweißapparates, wie zum Beispiel einer Schweißpistole, mit Schweißstrom, der zum Beispiel eine Abschmelzelektrode an der Schweißstelle abschmelzen lässt und/oder der das zu schweißende Material im Bereich der zu bildenden Schweißnaht erhitzt und aufschmilzt. Diese Schweißstromquellen verfügen über elektrische Polanschlüsse, an die entsprechende Leiter eines Schweißstromkabels angeschlossen werden können, die zum Beispiel zu einem Handschweißgerät oder zu einer robotermontierten Schweißpistole führen und den Schweißstrom übermitteln. Der Schweißstrom wird dabei in der Regel als Gleichstrom ausgegeben, sodass an der Schweißstromquelle entsprechende Polanschlüsse für einen elektrischen Pluspol und für einen elektrischen Minuspol angeordnet sind, wobei in der Regel der Minuspol zugleich mit einem Masseanschluss verbunden, also geerdet, ist.

Bestehende Schweißstromquellen sind dabei typischerweise mit für beide Pole identisch gebildeten Polanschlüssen ausgerüstet, in der Regel mit weiblichen Kontaktbuchsen. In diese weiblichen Kontaktbuchsen werden dann entsprechende männliche Kontaktstifte aufweisende Stecker der Leiter des Schweißstromkabels eingesteckt und dort festgelegt. Dabei muss ein Benutzer sehr genau darauf achten, welchen Stecker seines zwei Leitungen aufweisenden Schweißstromkabels er in welche der Kontaktbuchsen einsteckt, um sicherzustellen, dass an dem eigentlichen Schweißgerät, zum Beispiel einer Schweißpistole, die elektrischen Pole richtig anliegen, typischerweise der nicht geerdete Pluspol an der Schweißelektrode, der geerdete Minuspol an zu erdenden Gehäuseelementen und auch an einer an dem zu schweißenden Werkstück anzubringenden Polklemme.

Derartige Kupplungen, Verbindungen oder Anschlusstücke für Schweißgeräte sind beispielsweise aus der CH 681 213 A5, aus der WO 2016/116493 A1 oder der US 2017/0148553 A1 bekannt. Besonders offenbart CH 681 213A5 einen Steckeradapter, wobei der Steckeradapter einen an einem dem Zapfenabschnitt axial gegenüberliegenden Ende einen Kontaktstiftabschnitt aufweist, wobei der Steckeradapter einen Klemm- oder Haltmechanismus aufweist, wobei der Klemm-oder Haltmechanismus wenigstens einen den Zapfenabschnitt über ein an einem freien Ende des Zapfenabschnitts mündendes Längensegment in wenigstens zwei, vorzugsweise in wenigstens drei, besonders bevorzugt in vier, Sektionen unterteilenden Längsschlitz aufweist zum Auseinanderspreizen der Sektionen.

Hierbei kommt es nicht selten vor, dass auch erfahrenes Schweißpersonal, insbesondere wenn ein Anschließen des Schweißstromkabels in einer gewissen Hektik erfolgt, das Schweißstromkabel in vertauschter Polung anschließen, d. h. denjenigen Steckanschluss, der zum Verbinden mit dem Pluspol vorgesehen ist, in die den geerdeten Minuspol ausgebende Kontaktbuchse an der Schweißstromquelle einführen und dort festlegen und den Stecker, der eigentlich mit dem geerdeten Minuspol zu verbinden ist, in die weiblichen Kontaktbuchse einstecken und mit dieser verbinden, die den positiv gepolten Schweißstrom führt. Eine solche Verpolung ist äußerst unerwünscht, insbesondere da sie die Gefahr birgt, dass eigentlich mit dem Minuspol und darüber mit der Masse zu verbindende, zu erdende Bauelemente nicht geerdet, stattdessen stromführend sind, wie zum Beispiel leitende Gehäuseteile an einer Schweißpistole, oder dass das eigentlich zu erdende Werkstück mit dem elektrischen Pluspol verbunden ist, so dass von ihm eine Gefahr ausgeht. Darüber hinaus kann mit einem verpolten Schweißgerät nicht das präzise und geforderte Schweißergebnis erreicht werden.

Entsprechend ist es Aufgabe der Erfindung, eine Möglichkeit zu finden, ein versehentliches Verpolen, also ein Vertauschen der Anschlüsse des Schweißstromkabels im Hinblick auf die jeweils zugeordnete Kontaktbuchse, verhindern zu können.

Diese Aufgabe wird gelöst durch einen Steckeradapter zur Veränderung der Anschlussgeometrie eines Polanschlusses einer elektrischen Quelle, insbesondere einer Schweißstromquelle, von einer weiblichen Kontaktbuchse zu einem männlichen Kontaktstift mit den Merkmalen des Anspruchs 1. Vorteilhafte Weiterbildungen eines solchen erfindungsgemäßen Steckeradapters sind in den abhängigen Ansprüchen 2 bis 8 angegeben.

Der Ansatz, der mit der Erfindung verfolgt wird, besteht darin, die Anschlussgeometrie einer Sorte von Polanschlüssen der Schweißstromquelle, zum Beispiel die den positiven oder den geerdeten negativen Pol des Schweißstroms ausgebenden Anschlüsse, zu verändern und darüber zu erreichen, dass ein Schweißstromkabel mit entsprechend angepassten Verbindungsanschlüssen mit dem jeweiligen Leiter nur mit dem jeweils zugeordneten Pol, zum Beispiel dem geerdeten Minuspol oder dem Pluspol, verbunden werden kann. Hierzu dient der erfindungsgemäße Steckeradapter, der gemäß der Erfindung einen komplementär zu der weiblichen Kontaktbuchse an der elektrischen Quelle, insbesondere der Schweißstromquelle, geformten Zapfenabschnitt zum Einführen in die und zum Festlegen in der Kontaktbuchse der elektrischen Quelle aufweist und der ferner an einem dem Zapfenabschnitt axial gegenüberliegenden Ende einen Kontaktstiftabschnitt zum Verbinden mit einem eine korrespondierende weibliche Kontaktkupplung aufweisenden Anschlusskabel aufweist. Ein weiterer wesentlicher Aspekt Erfindung besteht darin, dass der Steckeradapter nicht nur in die weibliche Kontaktbuchse eingeführt und dort, ähnlich wie ein Anschlussstecker, einfach lösbar festgelegt wird. Vielmehr ist der Steckeradapter so gebildet, dass er in der weiblichen Kontaktbuchse an der elektrischen Quelle in einer Weise fixiert werden kann, dass er nicht ohne weiteres aus dieser wieder gelöst werden kann. Hierzu verfügt der Steckeradapter über einen nur mit einem Werkzeug, welches insbesondere ein Spezialwerkzeug sein kann, betätigbaren Klemm- oder Haltemechanismus. Mittels des Werkzeugs, vorzugsweise eines Spezialwerkzeugs, wird der mit dem Zapfenabschnitt in die weiblich Kontaktbuchse eingeführte Steckeradapter also in der weiblichen Kontaktbuchse so festgelegt, dass er nicht wie ein einfacher Anschlussstecker aus der weiblichen Kontaktbuchse wieder gelöst werden kann. Mittels des Spezialwerkzeugs kann der Steckeradapter allerdings vorzugsweise sehr wohl wieder gelöst werden, sodass die weibliche Kontaktbuchse an der elektrischen Quelle bei Bedarf auch in ihrer ursprünglichen Konfiguration weiterverwendet werden kann.

Mit dem erfindungsgemäßen Steckeradapter kann, wie einfach ersichtlich ist, eine identische Kontaktbuchsen als Polanschlüsse für sowohl Stromkabelenden zur Übernahme eines ersten elektrischen Pols, zum Beispiel des Pluspols, als auch für Polanschlüsse eines zweiten elektrischen Pols, zum Beispiel eines geerdeten elektrischen Minuspols, aufweisende elektrische Quelle so umgerüstet werden, dass zum Beispiel die elektrischen Pluspole weiterhin über die an der elektrischen Quelle vorhandenen weiblichen Kontaktbuchse zu kontaktieren sind, die elektrisch geerdeten Minuspole hingegen mittels in den zugehörigen weiblichen Kontaktbuchse festgelegten Steckeradaptern zu Kontaktstiftanschlüssen gewandelt werden zur Verbindung mit korrespondierenden weiblichen Kontaktkupplungen an den zugeordneten Leitungen von Schweißstromkabeln. Hierdurch wird erreicht, dass eine versehentliche Verwechslung der Anschlusspole, ein sogenanntes Verpolen, nicht mehr vorkommen kann, da die elektrischen Pole über die unterschiedlichen Anschlussgeometrien eindeutig zugeordnet sind und nur in einer vorgegebenen Verschaltung mit dem Stromkabel verbunden werden können.

Erfindungsgemäß weist der Klemm- oder Haltemechanismus wenigstens einen den Zapfenabschnitt über ein an einem freien Ende des Zapfenabschnitt mündendes Längssegment in wenigstens zwei, vorzugsweise in wenigstens drei, besonders bevorzugt in vier, Sektionen unterteilenden Längsschlitz auf und weiterhin weist ein mit dem Werkzeug betätigbares Spreizmittel zum Auseinanderspreizen der Sektionen bei in die Kontaktbuchse eingesetztem Zapfenabschnitt auf. Mit anderen Worten ist ein freies Ende des Zapfenabschnitts geschlitzt ausgebildet, mit einem Längsschlitz, wenn zwei Sektionen gebildet sind oder auch mehr als nur einem Längsschlitz, wenn mehrere Sektionen gebildet werden, zum Beispiel mit drei Längsschlitzen zum Bilden von drei Sektionen oder vier (bzw. zwei sich kreuzende) Längsschlitzen zum Bilden von vier Sektionen, sodass das freie Ende des Anschlusszapfens über Spreizmittel in radialer Richtung ausgeweitet und gespreizt werden kann. Durch Betätigen des Spreizmittels kann bei in die Kontaktbuchse eingesetztem Zapfenabschnitt dieser Zapfenabschnitt dann in der Kontaktbuchse verklemmt und damit kraftschlüssig, gegebenenfalls auch unter Einschluss eines Formschlusses, festgelegt werden. Einmal so festgelegt, kann der Zapfenabschnitt und kann damit der Steckeradapter nicht mehr ohne weiteres aus der weiblichen Kontaktbuchse an der elektrischen Quelle entfernt werden. Lediglich dann, wenn das Spreizmittel reversibel betätigt werden kann, kann durch das Einsetzen des Werkzeugs, welches vorzugsweise ein Spezialwerkzeug ist, das Spreizmittel zurückgenommen und damit die Aufspreizung der Sektoren rückgestellt werden, sodass der Zapfenabschnitt dann wiederum aus der weiblichen Kontaktbuchse entnommen werden kann, der Steckeradapter von der elektrischen Quelle abgenommen und entfernt werden kann.

Mit Vorteil kann zudem eine in einem dem freien Ende des Zapfenabschnitts gegenüberliegenden Endbereich des den wenigstens einen Längsschnitt aufweisenden Längensegments Materialschwächung vorgesehen sein. Diese kann insbesondere durch einen umlaufenden Einstich der äußeren Umfangsfläche des Zapfenabschnitts gebildet sein. Dieser Einstich kann auch die Form eine eingebrachten umlaufenden Nut aufweisen. Durch eine solche Materialschwächung wird ein Aufspreizen der Sektoren erleichtert; der Einstich wirkt dabei ähnlich einem Scharnier als Drehpunkt für das Ausspreizen der Sektoren.

Erfindungsgemäß weist das Spreizmittel eine in Richtung der Längsachse des Zapfenabschnitts bis in das geschlitzte Längssegment geführte Axialbohrung auf, die im Bereich des geschlitzten Längssegments einen sich konisch in Richtung des freien Endes des Zapfenabschnitts verjüngenden Abschnitt aufweist, wobei ein Spreizelement in der Bohrung angeordnet ist, das mittels einer Stelleinheit in Richtung des freien Endes in den sich konisch verjüngenden Abschnitt gezwungen und dort festgelegt werden kann zum Auseinanderspreizen der Sektionen. Ein solches Spreizelement kann zum Beispiel eine in dem sich konisch verjüngenden Abschnitt angeordnete Kugel sein (vergleiche Anspruch 3).

Es kann aber auch ein konisch oder kugelabschnittförmig gebildetes Ende eines Spreizstiftes oder eines ähnlichen Elements sein. Um in dieser Ausgestaltungsform mit dem konisch sich verjüngenden Abschnitt der Axialbohrung die Stelleinheit zu realisieren, kann diese ein in der Axialbohrung ausgebildetes Innengewinde und eine darin eingeschraubte Stellschraube aufweisen, bei der es sich insbesondere um eine kopflose Schraube nach Art einer Madenschraube handeln kann. Eine solche Schraube kann dann in Richtung des freien Endes des Zapfenabschnitts verlagert werden durch Einschrauben in das Innengewinde und dabei an oder mit einer vorderen Stirnseite das Spreizelement in den konischen Abschnitt der Axialbohrung treiben, zum Beispiel eine Kugel, einen stirnseitig an der Stellschraube angeformten konischen Abschnitt bzw. ein dort angeformtes Kugelsegment oder dergleichen.

Erfindungsgemäß weist die Stellschraube an einer dem freien Ende des Zapfenabschnitts gegenüberliegenden Stirnfläche einen Werkzeugangriff, insbesondere für ein Spezialwerkzeug, auf, wobei die Stellfläche mit dem Werkzeugangriff bevorzugt im Innern des Steckeradapters angeordnet und über eine in den Kontaktstiftabschnitt geführte Bohrung zugänglich ist. Auf diese Weise wird erreicht, dass ein Spezialwerkzeug in die entsprechende Bohrung eingeführt und mit dem Werkzeugangriff an der Stellschraube in Eingriff gebracht werden muss, um den Steckeradapter in der weiblichen Kontaktbuchse festzulegen, aber insbesondere auch, um diesen aus der weiblichen Kontaktbuchse womöglich wieder zu lösen. So wird verhindert, dass der- jedenfalls über einen längeren Zeitraum - für einen festen Verbleib in der weiblichen Kontaktbuchse vorgesehene Steckeradapter versehentlich oder mutwillig, jedoch ungewollt aus der weiblichen Kontaktbuchse entfernt und von dieser gelöst wird.

In einer möglichen Ausgestaltungsvariante kann der Zapfenabschnitt eine kreiszylindrische Außenform mit wenigstens einem auf der Mantelfläche angeordneten Rastnocken aufweisen. Eine solche Ausgestaltung für einen Steckstift ist gerade für die in die weiblichen Kontaktbuchsen von Schweißstromquellen einzuführende und dort festzulegende Anschlussstecker üblich; die Kontaktbuchsen an den Schweißstromquellen weisen in der Regel entsprechende Nuten und Rastaufnahmen auf.

Der Kontaktstiftabschnitt an dem erfindungsgemäßen Steckeradapter kann grundsätzlich jede Art von Geometrie und Kontur aufweisen. Die mit dem Stromkabel zur verbindenden weiblichen Kontaktkupplungen müssen entsprechend korrespondierend ausgebildet sein. Dabei ist es jedoch besonders einfach und zu bevorzugen, wenn der Kontaktstiftabschnitt eine im Wesentlichen gleiche Au-ßengeometrie aufweist wie der Zapfenabschnitt. Dann können die Schweißstromkabel mit den weiblichen Kontaktbuchsen an der elektrischen Quelle entsprechend gestalteten weiblichen Kontaktkupplungen versehen werden, sodass ein einheitliches Steckersystem erhalten wird.

Mit Vorteil ist ein Korpus des erfindungsgemäßen Steckeradapters einstückig aus einem elektrisch leitenden Material, insbesondere aus einem Metall, vorzugsweise aus Kupfer oder Messing, gebildet. Der Korpus umfasst dabei den Zapfenabschnitt, den Kontaktstiftabschnitt und gegebenenfalls einen zwischen diesen beiden Abschnitten gesondert gebildeten Mittelabschnitt.

Mit Vorteil ist zwischen dem Zapfenabschnitt und dem Kontaktabschnitt ein Mittelabschnitt gebildet, der einen gegenüber dem Zapfenabschnitt und dem Kontaktabschnitte vergrößerten Durchmesser aufweist, wobei in dem Mittelabschnitt umfangseitig ein Werkzeugangriff ausgebildet ist, zum Beispiel für das Ansetzen eines Ring- oder Maulschlüssels vorgesehene Angriffsflächen, wie sie zum Beispiel bei üblichen Schraubenmuttern gebildet sind.

Um den in die weibliche Kontaktbuchse eingesetzten Steckeradapter im Bereich des Mittelabschnitts, der bei angeschlossenem Schweißstromkabel freiliegen kann, zu isolieren, kann eine Überschubmuffe vorgesehen sein, die auf den Mittelabschnitt aufsetzbar, bei in einer weiblichen Kontaktbuchse montiertem Steckeradapter aufgesetzt, ist und aus einem elektrisch nicht leitenden Material, insbesondere einem Kunststoff besteht.

Weitere Vorteile und Merkmale des erfindungsgemäßen Steckeradapters ergeben sich aus der nachfolgenden Beschreibung eines Ausführungsbeispiels anhand der beigefügten Figuren. Dabei zeigen:

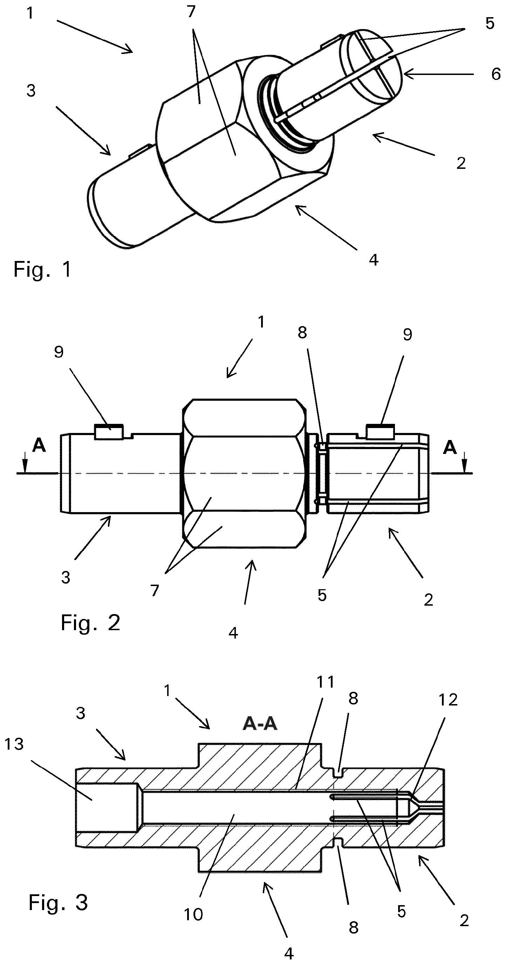

- Fig. 1: eine dreidimensionale Ansicht eines erfindungsgemäßen Steckeradapters nach einem möglichen Ausführungsbeispiel;
- Fig. 2: eine Seitenansicht des Steckeradapters aus Fig. 1;
- Fig. 3: eine Schnittansicht des Steckeradapters gemäß der in Fig. 2 mit A-A bezeichneten Schnittlinie (ohne die weiteren Komponenten des Spreizmechanismus im Innern des Korpus);
- Fig. 4: eine Stirnansicht des Steckeradapters nach Fig. 1 von der in dieser Figur links gezeigten Stirnseite des Kontaktstiftabschnitts her und ohne die weiteren Komponenten des Spreizmechanismus im Innern des Korpus;
- Fig. 5: eine Stirnansicht des Steckeradapters nach Fig. 1 von der in dieser Figur rechts gezeigten Stirnseite des Zapfenabschnitts her und ohne die weiteren Komponenten des Spreizmechanismus im Innern des Korpus;
- Fig. 6: eine der Fig. 2 vergleichbare Seitenansicht des Steckeradapters gemäß Fig. 1, jedoch mit auf dem Mittelabschnitt aufgesetzter Überschubmuffe;
- Fig. 7: eine Schnittansicht des Steckeradapters gemäß der in Fig. 6 mit B-B bezeichneten Schnittlinie;
- Fig. 8: eine Explosionsdarstellung des Steckeradapters, wie er in Fig. 6 gezeigt ist; und
- Fig. 9: eine dreidimensionale Ansicht der Überschubmuffe, wie sie gemäß Fig. 6 auf dem Mittelabschnitt des Steckeradapters aufgesetzt ist.

In den Figuren ist in den diversen Abbildungen ein mögliches Ausgestaltungsbeispiel eines erfindungsgemäßen Steckeradapters dargestellt. Dieses Ausführungsbeispiel, das in den Figuren nicht in allen konstruktiven Details und auch nicht zwingend maßstabsgerecht gezeigt ist, wird nachstehend zur besseren Veranschaulichung und Verdeutlichung der Erfindung näher beschrieben. Dabei ist an dieser Stelle noch einmal zu betonen, dass das gezeigte und nachfolgend näher beschrieben Ausführungsbeispiel nicht etwa die einzige mögliche Gestaltungsvariante eines erfindungsgemäßen Steckeradapters darstellt. Dem Fachmann werden ausgehend von der vorstehenden Offenbarung sowie auch unter Berücksichtigung der nachfolgenden Beschreibung des Ausführungsbeispiels weitere Gestaltungsvarianten offenbar, die ebenfalls die erfindungsgemäßen und wesentlichen Merkmale verwirklichen. Insbesondere sind auch die nachstehend anhand des Ausführungsbeispiels als in einer Ausgestaltungsvariante kombiniert beschriebenen Merkmale nicht zwingend auf eine solche Kombination beschränkt. Vielmehr können einzelne der Merkmale auch isoliert in abgewandelten Ausgestaltungsvarianten verwendet werden und können solche Merkmale auch als erfindungswesentlich aufgefasst werden, ohne dass diese ausschließlich in Bezug auf das gezeigte Ausführungsbeispiel zu verstehen sind. Dies gilt insbesondere für die funktional wesentlichen Merkmale, die die erfindungsgemäß angestrebte Wirkung des Steckeradapters erreichen lassen.

Das in den Figuren gezeigte und nachfolgend beschriebene Ausführungsbeispiel betrifft und zeigt einen Steckeradapter 1. Dieser Steckeradapter 1 ist mit einem Korpus einstückig aus einem elektrisch leitenden Material, insbesondere einem Metall, vorzugsweise Kupfer oder Messing, gebildet. Der Steckeradapter 1 mit seinem Korpus weist zunächst einmal drei wesentliche Abschnitte und Elemente auf, nämlich einen Zapfenabschnitt 2, einen Kontaktstiftabschnitt 3 sowie einen Mittelabschnitt 4. Zapfenabschnitt 2 und Kontaktstiftabschnitt 3 sind dabei im Hinblick auf ihre Außenform (Kontur und Dimensionen) im Wesentlichen gleich gebildet. Sie entsprechen in ihrer Formgebung einem gängigen Standard für einen Anschlussstecker zum Einführen von und Verbinden mit einer weiblichen Kontaktbuchse einer Schweißstromquelle.

Das Besondere an dem Steckeradapter 1 ist der Umstand, dass der Zapfenabschnitt 2 ausgebildet ist, um in eine weibliche Kontaktbuchse einer Schweißstromquelle zum Anschluss eines Schweißsromkabels eingeführt und darin festgelegt zu werden, wobei entsprechende Festlegungsmittel vorgesehen sind, die den Zapfenabschnitt 2 und damit den Steckeradapter 1 in der weiblichen Kontaktbuchse in einer Weise festlegen, dass der Steckeradapter 1 nicht ohne Einsatz von Werkzeug, insbesondere von Spezialwerkzeug, aus der weiblichen Kontaktbuchse wieder gelöst werden kann. Erreicht wird dies in dem gezeigten Ausführungsbeispiel durch in den Zapfenabschnitt 2 geführte, diesen in radialer Richtung vollständig durchstoßende Längsschlitze 5, die im gezeigten Ausführungsbeispiel symmetrisch und kreuzweise angeordnet sind. Die Längsschlitze 5 erstrecken sich über ein Längensegment des Zapfenabschnitts 2 in Längsrichtung des Letzteren und unterteilen den Zapfenabschnitt 2 so in mehrere, im gezeigten Ausführungsbeispiel in vier im Wesentlichen gleich geformte, Sektionen. Die Längsschlitze 5 durchstoßen insbesondere die Stirnfläche des Zapfenabschnitts 2 an einer Stirnfläche am freien Ende 6 des Zapfenabschnitts 2. Im gezeigten Ausführungsbeispiel sind die Längsschlitze 5 im Wesentlichen über die gesamte Länge des Zapfenabschnitts 2 geführt. Ein auf der Außenseite des Zapfenabschnitts 2 umlaufend um den gesamten Umfang angebrachter Einstich 8, der auch als umlaufende Nut bezeichnet werden kann, gibt eine Materialschwächung des Materials des Zapfenabschnitts 5 in diesem Bereich und wirkt wie ein Scharnier, um welches die Sektionen nach außen verkippt bzw. verschwenkt werden können in einer wie nachstehend noch näher beschriebenen Weise.

Der Mittelabschnitt 4 ist mit einem gegenüber dem Zapfenabschnitt 2 und dem Kontaktstiftabschnitt 3 vergrößerten Durchmesser ausgebildet und hat eine Mantelfläche, auf der Werkzeugangriffflächen 7, hier zum Ansetzen eines handelsüblichen Maul- oder Ringschlüssels, ausgebildet sind. So kann der Steckeradapter 1 mittels eines solchen Werkzeugs in eine Kontaktbuchse einer Schweißstromquelle eingeführt und darin zunächst einmal in einer wie ich nachstehend noch näher beschriebenen Weise verriegelt werden.

Der Kontaktstiftabschnitt 3 dient einer späteren Verbindung mit einer an einem Leiter eines Schweißstromkabels angeordneten weiblichen Kontaktkupplung, die im Hinblick auf ihre Geometrie im Wesentlichen entsprechend der weiblichen Kontaktbuchse an der Schweißstromquelle ausgebildet ist.

Sowohl an dem Zapfenabschnitt 2 als auch an dem Kontaktstiftabschnitt 3 ist umfangseitig an einer Position jeweils eine Rastnocken 9 ausgebildet, der über die ansonsten kreiszylinderförmige Mantelfläche des jeweiligen Abschnittes vorsteht. Diese jeweiligen Rastnocken 9 dienen einer verrastenden Verbindung des Zapfenabschnitts 2 bzw. des Kontaktstiftabschnitts 3 mit der weiblichen Kontaktbuchse an der Schweißstromquelle bzw. der weiblichen Kontaktkupplung des Schweißkabels, in welcher jeweils eine entsprechende Längsnut ausgebildet ist, in der der Rastnocken 9 gleitend in die Kontaktbuchse bzw. die Kontaktkupplung vordringen kann, und in der weiterhin ausgehend von dieser Längsnut eine Radialnut geführt ist, in welche der Rastnocken 9 durch relative Verdrehung der Kontaktbuchse bzw. der Kontaktkupplung zu dem Zapfenabschnitt 2 bzw. dem Kontaktstiftabschnitt 3 verrastend eingeführt werden kann. Diese Verdrehung kann z.B. erreicht werden, indem an der Werkzeugangrifffläche 7 an dem Mittelabschnitt ein Werkzeug, z.B. ein Maulschlüssel, angesetzt und über diesen ein Drehmoment aufgebracht wird.

Im Innern des Korpus des Steckeradapters 1 ist eine Axialbohrung 10 geführt, die in einem mittleren Abschnitt derselben mit einem Innengewinde 11 versehen ist. Diese Axialbohrung 10 erstreckt sich insbesondere bis in den Zapfenabschnitt 2 hinein, endet dort als Sacklochbohrungen bzw. geht über in die Öffnungen, die durch die Längsschlitze 5 in diesem Bereich gebildet sind. Zu einem vorderen Ende hin verjüngt sich die Axialbohrung 10 in einem konisch sich verjüngenden Abschnitt 12. Rückwärtig und von der Stirnseite des Kontaktstiftabschnitts 3 her zugänglich ist eine rückwärtige Aufweitung 13 der Axialbohrung 10 vorgesehen. Durch diese kann insbesondere ein Werkzeug, vorzuweise ein Spezialwerkzeug, in Richtung der Axialbohrung 10 geführt werden.

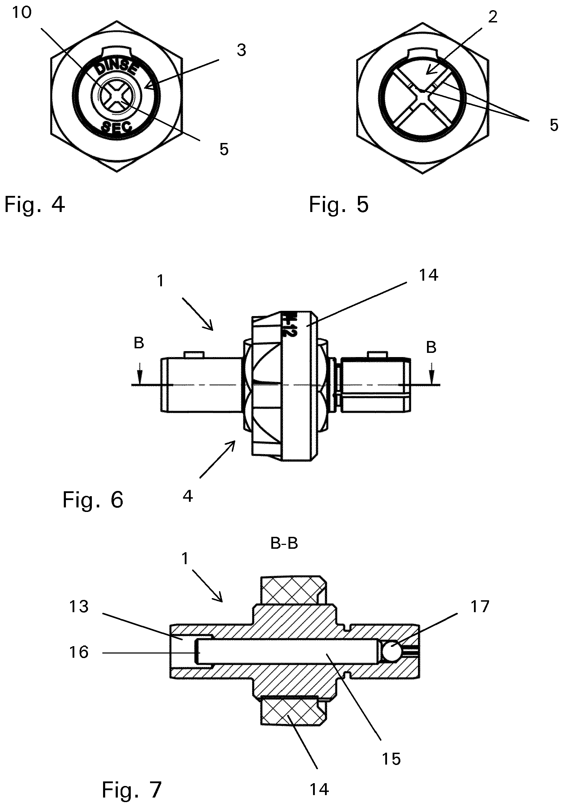

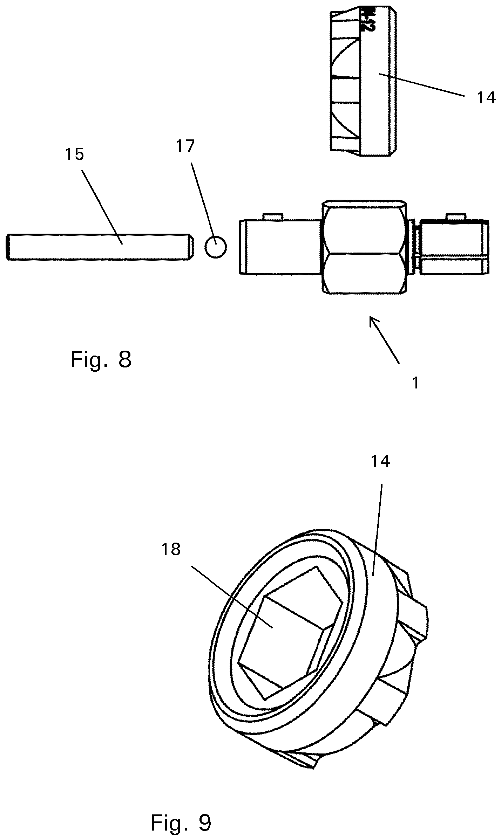

In der Axialbohrung 10 ist im montierten Zustand (vergleiche Figuren 7 und 8) zunächst eine Kugel 17 eingeführt, die in dem konisch sich verjüngenden Abschnitt 12 sitzt. Diese Kugel 17 wirkt in einer nachstehend noch beschriebenen Weise als Spreizelement. Weiterhin ist in die Axialbohrung 10 ein Gewindestift 15 eingeführt, der mit seinem Außengewinde in das Innengewinde 11 der Axialbohrung 10 eingreift. An seinem rückwärtigen Stirnende 16 weist dieser Gewindestift 5 einen Werkzeugangriff, zum Beispiel eine entsprechende Innenkontur auf, mit der ein Werkzeug, insbesondere Spezialwerkzeug, in Eingriff gebracht werden kann, um ein Drehmoment auf den Gewindestift 15 aufzubringen und diesen damit im Innengewinde 11 der Axialbohrung 10 vor bzw. zurück zu bewegen. Mit einer dem rückwärtigen Stirnende 16 gegenüberliegenden, vorderseitigen Stirnfläche liegt der Gewindestift 15 an der Kugel 17 an.

Durch ein weiteres Einschrauben des Gewindestiftes 15 in die Axialbohrung 10 hinein in Richtung des konisch sich verjüngenden Abschnitts 12 drückt das vordere Stirnende des Gewindestifts 15 auf die Kugel 17 und presst Letztere weiter in den konisch sich verjüngenden Abschnitt 12 hinein. Dadurch werden die durch die Längsschlitze 5 gebildeten Sektionen des Zapfenabschnitts 2 auseinandergespreizt und verkippen um die durch den umlaufenden Einstich 8 gebildeten Scharniergelenke auswärts. Durch dieses Spreizen kann eine Klemmkraft aufgebracht werden, die den Zapfenabschnitt 2 in einer weiblichen Kontaktbuchse, in die dieser zuvor eingesetzt worden ist, kraftschlüssig festhält.

Im Gebrauch wird also der Steckeradapter 1 gemäß der Erfindung, insbesondere in der wie vorstehend beschriebenen Ausgestaltung, in eine weibliche Kontaktbuchse einer elektrischen Quelle, insbesondere einer Schweißstromquelle, zunächst in üblicher Weise eingesetzt und dort festgelegt. Im Anschluss wird durch Ansetzen eines Werkzeugs am rückwärtigen Stirnende 16 des Gewindestifts 15 dieser in dem Innengewinde 11 durch Einschrauben so bewegt, dass er in Richtung des konisch sich verjüngenden Abschnitts 12 fortschreitet. Durch den dadurch aufgebauten Druck auf die und die leichte Positionsverlagerung der Kugel 17 werden die Sektoren des Zapfenabschnitts 2 gespreizt und verklemmen so in der weiblichen Kontaktbuchse. Ohne entsprechendes Werkzeug, mit dem der Gewindestift 15 wiederum gelöst, d. h. in der Axialbohrung 10 durch Verschrauben gegenüber dem Innengewinde 11 von dem konisch sich verjüngenden Abschnitt 12 wieder fortbewegt werden kann, kann der so in der Kontaktbuchse festgelegte Steckeradapter 1 nicht mehr aus der Kontaktbuchse entfernt werden. Die Anschlussgeometrie der Kontaktbuchse ist dadurch von vormals weiblich abgewandelt nun zu einer männlichen Anschlussgeometrie, gebildet durch den Kontaktstiftabschnitt 3 des Steckeradapters 1.

Somit sind die elektrischen Anschlusspole an der elektrischen Quelle, wenn diese insgesamt durch gleich gebildete Kontaktbuchsen realisiert sind, nach unterschiedlichen Geometrien zu individualisieren, sodass bei entsprechend ausgerüsteten Stromkabeln, insbesondere Schweißstromkabeln, nun auch eine korrekte Zuordnung der jeweiligen Pole erfolgen kann, der Kabelanschluss des Minuspols entsprechend nur noch an den als weibliche Buchse oder männlicher Kontaktstift ausgebildeten entsprechenden Polanschluss an der Schweißstromquelle (bzw. gilt gleiches in gleicher Weise für den Kabelanschluss des Pluspols).

Auf den in der Kontaktbuchse montierten Steckeradapter 1 kann noch eine Überschubmuffe 14 aufgesetzt werden, die auf dem Mittelabschnitt 4 sitzt, wie dies in den Figuren 6 und 7 gezeigt ist. Diese Überschubmuffe 14 besteht aus einem isolierenden Material, zum Beispiel Kunststoff und soll verhindern, dass durch versehentlichen Kontakt mit dem Steckeradapter 1 eine Gefahr ausgeht, wenn dieser Strom führend geschaltet ist. Hierzu weist die Überschubmuffe 14 eine Innenfläche 18 auf, die korrespondierend zu der Umfangsfläche des Mittelabschnitts 4, im vorliegenden Ausführungsbeispiel entsprechend sechskantförmig wie eine Schraubenmutter, gebildet ist.

### Bezugszeichenliste

- 1: Steckeradapter
- 2: Zapfenabschnitt
- 3: Kontaktstiftabschnitt
- 4: Mittelabschnitt
- 5: Längsschlitz
- 6: freies Ende
- 7: Werzeugangrifffläche
- 8: Einstich
- 9: Rastnocken
- 10: Axialbohrung
- 11: Innengewinde
- 12: konisch sich verjüngender Abschnitt
- 13: rückwärtige Aufweitung
- 14: Überschubmuffe
- 15: Gewindestift
- 16: rückwärtiges Stirnende
- 17: Kugel
- 18: Innenfläche

## Patentansprüche

1. Steckeradapter (1) zum Verändern der Anschlussgeometrie eines Polanschlusses einer elektrischen Quelle, insbesondere einer Schweißstromquelle, von einer weiblichen Kontaktbuchse zu einem männlichen Kontaktstift, wobei der Steckeradapter (1) einen komplementär zu der weiblichen Kontaktbuchse geformten und somit einen männlichen Kontaktzapfen bildenden Zapfenabschnitt (2) zum Einführen in die und zum Festlegen in der weiblichen Kontaktbuchse der elektrischen Quelle und an einem dem Zapfenabschnitt (2) axial gegenüberliegenden Ende einen einen männlichen Kontaktstift bildenden Kontaktstiftabschnitt (3) zum Verbinden mit einem eine zu dem männlichen Kontaktstift korrespondierende weibliche Kontaktkupplung aufweisenden Anschlusskabel aufweist, wobei der Steckeradapter (1) einen Klemm- oder Haltmechanismus aufweist zum fixierenden Festlegen des Zapfenabschnitts (2) in der weiblichen Kontaktbuchse des Polanschlusses der elektrischen Quelle, und wobei der Klemm- oder Haltemechanismus wenigstens einen den Zapfenabschnitt (2) über ein an einem freien Ende des Zapfenabschnitts (2) mündendes Längensegment in wenigstens zwei, vorzugsweise in wenigstens drei, besonders bevorzugt in vier, Sektionen unterteilenden Längsschlitz (5) aufweist,
**dadurch gekennzeichnet, dass** der Klemm- oder Haltemechanismus
• ein Spreizmittel aufweist zum Auseinanderspreizen der Sektionen bei in die weibliche Kontaktbuchse eingesetztem Zapfenabschnitt (2) zum Festlegen des Zapfenabschnitts (2) in der weiblichen Kontaktbuchse, wobei
• das Spreizmittel eine in Richtung der Längsachse des Zapfenabschnitts (2) bis in das geschlitzte Längensegment geführte Axialbohrung (10) aufweist, die im Bereich des geschlitzten Längensegments einen sich konisch in Richtung des freien Endes (6) des Zapfenabschnitts (2) verjüngenden Abschnitt (12) aufweist, wobei ein Spreizelement in der Axialbohrung (10) angeordnet ist, das mittels einer Stelleinheit in Richtung des freien Endes (6) in den sich konisch verjüngenden Abschnitt (12) gezwungen und dort festgelegt werden kann zum Auseinanderspreizen der Sektionen,
• die Stelleinheit eine im Innern des Steckeradapters (1) in der Axialbohrung (10) ausgebildetes Innengewinde (11) und eine darin eingeschraubte Stellschraube (15), insbesondere eine kopflose Schraube bzw. einen Gewindestift, enthält, und
• die Stellschraube (15) an einer dem freien Ende (6) des Zapfenabschnittes (2) gegenüberliegenden Stirnfläche (16) einen Werkzeugangriff, insbesondere für ein Spezialwerkzeug, aufweist, wobei die Stirnfläche (16) insbesondere mit dem Werkzeugangriff im Innern des Steckeradapters (1) angeordnet und über eine in den Kontaktstiftabschnitt (3) geführte Bohrung (13) zugänglich ist.

2. Steckeradapter (1) nach Anspruch 1, **gekennzeichnet durch** eine in einem dem freien Ende (6) des Zapfenabschnitts (2) gegenüberliegenden Endbereich des den wenigstens einen Längsschlitz (5) aufweisenden Längensegments vorgesehene Materialschwächung, insbesondere einen umlaufenden Einstich (8) auf der äußeren Umfangsfläche des Zapfenabschnitts (2).

3. Steckeradapter (1) nach einem der Ansprüche 1 oder 2, **dadurch gekennzeichnet, dass** die Stelleinheit eine in dem sich konisch verjüngenden Abschnitt (12) angeordnete Kugel (17) umfasst.

4. Steckeradapter (1) nach einem der vorhergehenden Ansprüche **dadurch gekennzeichnet, dass** der Zapfenabschnitt (2) eine kreiszylindrische Außenform mit wenigstens einem auf der Mantelfläche angeordneten Rastnocken (9) aufweist.

5. Steckeradapter (1) nach einem der vorhergehenden Ansprüche, **dadurch gekennzeichnet, dass** der Kontaktstiftabschnitt (3) eine im wesentlichen gleiche Außengeometrie aufweist wie der Zapfenabschnitt (2).

6. Steckeradapter (1) nach einem der vorhergehenden Ansprüche, **dadurch gekennzeichnet, dass** er einen einstückig aus einem elektrisch leitenden Material, insbesondere aus einem Metall, vorzugsweise aus Kupfer oder Messing, gebildeten Korpus aufweist.

7. Steckeradapter (1) nach einem der vorhergehenden Ansprüche, **dadurch gekennzeichnet, dass** es zwischen dem Zapfenabschnitt (2) und dem Kontaktstiftabschnitt (3) einen Mittelabschnitt (4) mit gegenüber dem Zapfenabschnitt (2) und dem Kontaktstiftabschnitt (3) vergrößertem Durchmesser aufweist, wobei in dem Mittelabschnitt (4) umfangsseitig ein Werkzeugangriff (7) ausgebildet ist.

8. Steckeradapter (1) nach Anspruch 7, **gekennzeichnet durch** eine Überschubmuffe (14), die auf den Mittelabschnitt (4) aufsetzbar ist und aus einem elektrisch nicht leitenden Material, insbesondere aus einem Kunststoff, besteht.

## Claims

1. A plug adapter (1) for changing the connection geometry of a pole connection of an electrical source, in particular a welding current source, from a female contact socket to a male contact pin, wherein the plug adapter (1) has a pin section (2) shaped complementary to the female contact socket and thus forming a male contact pin for insertion into and for fixing in the female contact socket of the electrical source and, at an end axially opposite the pin section (2), a contact pin section (3) forming a male contact pin for connection to a connecting cable having a female contact coupling corresponding to the male contact pin,
wherein the plug adapter (1) has a clamping or retaining mechanism for fixing the pin section (2) in the female contact socket of the pole connection of the electrical source, and
wherein the clamping or retaining mechanism has at least one longitudinal slot (5) subdividing the pin section (2) into at least two, preferably into at least three, particularly preferably into four, sections via a longitudinal segment opening at a free end of the pin section (2), **characterised in that** the clamping or retaining mechanism
- has a spreading means for spreading apart the sections when the pin section (2) is inserted in the female contact socket for fixing the pin section (2) in the female contact socket, wherein
- the expansion means has an axial bore (10) which is guided in the direction of the longitudinal axis of the journal section (2) as far as the slotted longitudinal segment and which, in the region of the slotted longitudinal segment, has a section (12) which tapers conically in the direction of the free end (6) of the journal section (2), wherein a spreading element is arranged in the axial bore (10) which can be forced by means of an adjusting unit in the direction of the free end (6) into the conically tapering section (12) and can be fixed there for spreading apart the sections,
- the adjusting unit comprises an internal thread (11) formed inside the plug adapter (1) in the axial bore (10) and a set screw (15) screwed therein, in particular a headless screw or a threaded pin, and
- the set screw (15) has a tool engagement, in particular for a special tool, on an end face (16) opposite the free end (6) of the pin section (2), the end face (16) being arranged in particular with the tool engagement in the interior of the plug adapter (1) and being accessible via a bore (13) led into the contact pin section (3).

2. A plug adapter (1) according to claim 1, **characterised by** a material weakening, in particular a circumferential recess (8) on the outer circumferential surface of the pin section (2), provided in an end region, opposite the free end (6) of the pin section (2), of the longitudinal segment having said at least one longitudinal slot (5).

3. A plug adapter (1) according to one of claims 1 or 2, **characterised in that** the adjusting unit comprises a ball (17) arranged in the conically tapering section (12).

4. A plug adapter (1) according to one of the preceding claims, **characterised in that** the spigot section (2) has a circular-cylindrical outer shape with at least one latching cam (9) arranged on the lateral surface.

5. A plug adapter (1) according to one of the preceding claims, **characterized in that** the contact pin section (3) has a substantially identical outer geometry as the spigot section (2).

6. A plug adapter (1) according to one of the preceding claims, **characterised in that** it has a body formed in one piece from an electrically conductive material, in particular from a metal, preferably copper or brass.

7. A plug adapter (1) according to one of the preceding claims, **characterised in that** it has, between the pin section (2) and the contact pin section (3), a middle section (4) with an enlarged diameter compared to the pin section (2) and the contact pin section (3), a tool engagement (7) being formed in the middle section (4) on the circumferential side.

8. A plug adapter (1) according to claim 7, **characterised by** a push-over sleeve (14) which can be placed on the central section (4) and consists of an electrically nonconductive material, in particular a plastic.

## Revendications

1. Adaptateur de fiche (1) pour changer la géométrie de connexion d'une connexion polaire d'une source électrique, en particulier une source de courant de soudage, d'une prise de contact femelle à une broche de contact mâle, dans lequel l'adaptateur de fiche (1) a une section de broche (2) de forme complémentaire à la prise de contact femelle et formant ainsi une broche de contact mâle pour l'insertion et la fixation dans la prise de contact femelle de la source électrique et, à une extrémité axialement opposée à la section de broche (2), une section de broche de contact (3) formant une broche de contact mâle pour la connexion à un câble de connexion ayant un couplage de contact femelle correspondant à la broche de contact mâle,
dans lequel l'adaptateur de fiche (1) possède un mécanisme de serrage ou de retenue pour fixer la section de broche (2) dans la prise de contact femelle de la connexion polaire de la source électrique, et
dans lequel le mécanisme de serrage ou de retenue comporte au moins une fente longitudinale (5) divisant la section de broche (2) en au moins deux, de préférence en au moins trois, de préférence encore en quatre sections par l'intermédiaire d'une ouverture de segment longitudinal à une extrémité libre de la section de broche (2), **caractérisé en ce que** le mécanisme de serrage ou de retenue
- comporte un moyen d'écartement pour écarter les sections lorsque la section de broche (2) est insérée dans la prise de contact femelle pour fixer la section de broche (2) dans la prise de contact femelle, dans lequel
- le moyen d'expansion présente un alésage axial (10) qui est guidé dans la direction de l'axe longitudinal de la section de tourillon (2) jusqu'au segment longitudinal fendu et qui, dans la zone du segment longitudinal fendu, présente une section (12) qui se rétrécit de manière conique en direction de l'extrémité libre (6) de la section de tourillon (2), dans lequel un élément d'écartement est disposé dans l'alésage axial (10), qui peut être forcé au moyen d'une unité de réglage en direction de l'extrémité libre (6) dans la section conique (12) et peut y être fixé pour écarter les sections,
- l'unité de réglage comprend un filetage intérieur (11) formé à l'intérieur de l'adaptateur de fiche (1) dans l'alésage axial (10) et une vis de réglage (15) vissée à l'intérieur, en particulier une vis sans tête ou une goupille filetée, et
- la vis de réglage (15) présente un engagement d'outil, en particulier pour un outil spécial, sur une face d'extrémité (16) opposée à l'extrémité libre (6) de la section de broche (2), la face d'extrémité (16) étant disposée en particulier avec l'engagement d'outil à l'intérieur de l'adaptateur de fiche (1) et étant accessible par un alésage (13) conduit dans la section de broche de contact (3).

2. Adaptateur de fiche (1) selon la revendication 1, **caractérisé par** un affaiblissement du matériau, en particulier un renfoncement circonférentiel (8) sur la surface circonférentielle extérieure de la section de broche (2), prévu dans une zone d'extrémité, opposée à l'extrémité libre (6) de la section de broche (2), du segment longitudinal comportant ladite au moins une fente longitudinale (5).

3. Adaptateur de fiche (1) selon l'une des revendications 1 ou 2, **caractérisé par le fait que** l'unité de réglage comprend une bille (17) disposée dans la section conique (12).

4. Adaptateur de fiche (1) selon l'une des revendications précédentes, **caractérisé en ce que** la section de broche (2) a une forme extérieure circulaire-cylindrique avec au moins une came de verrouillage (9) disposée sur la surface latérale.

5. Adaptateur de fiche (1) selon l'une des revendications précédentes, **caractérisé par le fait que** la section de broche de contact (3) a une géométrie extérieure sensiblement identique à celle de la section de broche (2).

6. Adaptateur de prise (1) selon l'une des revendications précédentes, **caractérisé en ce qu'**il a un corps formé d'une seule pièce en matériau conducteur d'électricité, en particulier en métal, de préférence en cuivre ou en laiton.

7. Adaptateur de fiche (1) selon l'une des revendications précédentes, **caractérisé en ce qu'**il présente, entre la section de broche (2) et la section de broche de contact (3), une section médiane (4) dont le diamètre est plus grand que celui de la section de broche (2) et de la section de broche de contact (3), un engagement d'outil (7) étant formé dans la section médiane (4) sur le côté circonférentiel.

8. Adaptateur de fiche (1) selon la revendication 7, **caractérisé par** un manchon (14) qui peut être placé sur la section centrale (4) et qui est constitué d'un matériau électriquement non conducteur, en particulier une matière plastique.
